# EUROPEAN PATENT APPLICATION

(11) **EP 1 881 432 A1**
(43) Date of publication of application: **23.01.2008**
(21) Application number: 06012701.6
(22) Date of filing: 21.06.2006
(51) Int. Cl.: G06F 21/00

(54) **A software distribution system with a software key containing an ID of the distributor**

(71) Applicant: Bizextender Aps, 7000 Fredericia (DK)
(72) Inventor: Børsen, Peter Juhl, 6000 Kolding (DK); Thrane, Flemming, 7000 Fredericia (DK); Andersen, Kim Hermann, 7000 Fredericia (DK)
(74) Representative: Medenwaldt, Robin

(57) **Abstract**

A computer system comprising
- a distributor server for authorised distribution of computer program products, the distributor server being configured to distribute the computer program product with added information that is associated with the distributor server, for example in the form of a first software key,
- a license server independent of the distributor server for issuing a license for the distributed computer program products upon request from a client, for example though a second software key, the request containing a computer identification uniquely identifying the client computer, the license sever being programmed to issue a license containing a license software key to be forwarded via a data network to the client and containing digital data necessary for activation of the functionality of the computer program product but limited to the specific client computer of the user.

## Description

### FIELD OF THE INVENTION

The present invention relates a computer system with a distributor server for authorised distribution of computer program products and a license server for issuing a license with a software key necessary for running the program, wherein the software key contains data uniquely identifying the client computer for limiting the program to only be executable on the specific client computer. The invention also relates to a license server, a client server, a software key and a computer program product.

### BACKGROUND OF THE INVENTION

It is common practice to sell software products through the Internet. Typically, a software vendor sells software desired by a user, and issues a license for the use of the software. The license is implemented by transmitting a small security software program, typically called a license key, which is necessary for activation of the software to run on the computer where the software is installed. Often, the license key is downloaded along with the software from a software sale server.

The license key necessary to execute the software product, ensures that the software program is used in accordance with the license, for example such that others than the user for whom the license key is issued is prohibited from illegally copying and using the software.

However, if a license for software is issued without authenticating the apparatus specially designated for the software, for example a personal computer (PC), the user owning the software can reveal information on the license to a third party so that the third party other than the user owning the software is capable of using the software.

An improvement with respect to this problem has been disclosed in European patent application EP 1 522 914. In order to prevent downloaded software from being copied and used illegally, the software sale server is informed of apparatus information unique to the computer and a user ID assigned to the user when the computer is sold to the user. When the user purchases sale software from the software sale server, the software sale server saves in a database the name and version of the sale software, associating the name and the version with the user ID and the apparatus information. When the user activates the sale software for the first time, the computer transmits the user ID, the apparatus information, the software name and the software version to the software sale server to be collated with their respective counterparts, which were saved before in a database server. If a result of collation indicates that the pieces of information match their counterparts, a license key for activating the sale software is transmitted to the computer from a license server functionally connected to the database server and the sale server.

However, the system disclosed in European patent application EP 1 522 914 has a number of disadvantages. First of all, the system requires that the user ID is assigned to the client and stored when the computer is sold to the client. As the user ID is personal, the selling of the computer by the client to another client does not automatically imply a usable user ID for the other client, which implies difficulties for the other client when attempting to buy new software products via the sale server.

Another disadvantage is the fact that the seller needs to keep the database updated which implies necessary maintenance work such that this system is only suitable for rather large sale systems. For sellers with sale of only a few products, this system is inappropriate. This is the more valid in as much as the sale server also needs a connection to a license server for issue of a license, making the system complicated. Furthermore, the connection between the sale server, the database server and the license server has to work properly at all times in order for a client to experience the system to run smoothly, when the client desires to get a license immediately after purchasing the product from the seller.

### DESCRIPTION / SUMMARY OF THE INVENTION

It is therefore the object of the invention to provide a system that does not have the above disadvantages.

This object is achieved by a computer system comprising
- a distributor server for authorised distribution of computer program products, the distributor server being configured to distribute the computer program product with added identity information that is associated with the distributor server, for example in the form of a first software key,
- a license server independent of the distributor server for issuing a license for the distributed computer program products upon request from a client, for example though a second software key, the request containing a computer identification uniquely identifying the client computer, the license sever being programmed to issue a license containing a license software key to be forwarded via a data network to the client and containing digital data necessary for activation of the functionality of the computer program product but limited to the specific client computer of the user.

By the invention, the license software server is independent of a distributor/sale server. This means that the license server needs not to be functionally connected to the distributor server. In fact, the distributor server may not at all be a sale server, because no financial transaction is required with the sale server. For small scale distribution and sale of computer program products, this is an ideal situation. The distributor server is easily set up only to distribute software. License issue and payment is decoupled from the distribution and may be performed in a larger instance working for a plurality of distributors. On the other hand, as the request for a license contains information about the distributor, part of the license earning can be transmitted to the distributor after issue of a license and payment by a client.

The task of the distributor server according to the invention is not actually to sell anything but merely a free distribution of software program products. The system according to the invention is constructed such that the necessary information, namely only data indicative of the corresponding distributor server itself, is transmitted along with the distributed product, for example as a first software key. All other information is independent of the distributor server, as prices for licenses are stored in a database in connection with the license server.

This also has got the advantage, that downloaded products can be distributed freely among users. For example, if one client has downloaded a program from a distributor server, the client may give this program freely to other users. The other users cannot run the program, as the program is prevented from running, until a license key has been received by the computer machine, where the license key contains the ID of the respective computer machine on which the program is to run. Thus, only when the products are registered with a license afterwards, where the license includes the actual ID of the computer for running the program, a user can execute the program.

Thus, a big advantage of the system according to the invention is the fact that the request for a license contains the ID of the distributor associated with the distributor server. For example, if a program has been downloaded from a distributor server only once, and the user distributes the program among other users, the ID from the distributor server follows the program such that further licenses will induce an earning for the distributor every time, a license is requested for a program originating as a copy from the originally downloaded program.

The distribution among users may be an advantage for those users with a slow Internet connection. Instead of requiring long time for download of a program form the distributor server through the slow connection, another user with a fast connection may download the program, create a data disk with the program and handle the disk to the user with the slow Internet connection. This user may install the product from the disk and only needs to access the license server through the Internet for paying for a license in order to get the program running on the computer machine.

The consequence is that downloaded programs may freely be distributed among users without being illegal. As the programs are prevented from running on more than one machine, a high degree of security is achieved for the selling party. For the distributor, there is the advantage that an income is assured also if only a few programs are downloaded, if only the users distribute the program among each others - as many users typically do - and afterwards pay for a license. Thus, the invention takes into account the habits of - especially young - users and secures a proper income for the distributor by the technical solutions according to the invention, where a license server issues licenses without interference from the distributor server.

The first software key may be an alphanumerical code that is created by the distributor server and displayed to the client at the distributor's internet site when downloading the product. The client may then enter the alphanumerical code through the keyboard when the client starts a pre-step of the program product. Alternatively, the first software key may be displayed to the client, when downloading has terminated. As a further alternative, the first software key may not be displayed to the user at all but may lie implicitly in the downloaded software program.

The second software key may be a result from the pre-step of the program product. During this pre-step, the product uses reading means for reading an identification code from the hardware of the computer, for example the alphanumeric identification number of the processing unit (CPU). By incorporating this alphanumeric identification number, for example in an encrypted way, a second software key is generated automatically by suitable program routines in the program product. This software key contains data for identification of the distributor, which is obtained from the first software key, and data for identification of the specific client computer, to which the product has been downloaded. The second software key may be an alphanumeric code that has to be entered into a corresponding field on the user interface when the user accesses the license server, for example by way of a publicly accessible Internet site. Alternatively, the second software key may automatically be transmitted to the license server upon request by the user, for example by indication during the pre-step of the program.

After receipt of the second software key, a third software key is generated by the license server, namely the license software key. In case of an Internet communication, the license software key may be displayed to the client as an alphanumerical code on the user interface of the license server's Internet site. The code may be entered by the client through the keyboard as a validation action during the pre-step for getting the product properly running on the client computer. After the entering of this code, the program may function as desired by the client. Alternatively, the license software key may automatically be transferred to the computer of the client in order to initiate a proper activation and functioning of the computer program product.

In order to also provide a proper means for payment of the program to the creator/programmer of the program, the license server is functionally connected to a database containing data indicative of the creator of the computer program product for transfer of part of the income from the purchased license to the creator.

An idea behind the invention is the fact that the system also comprises an Internet portal for receiving a computer programs product from a product creator. The creator/programmer may upload his program on the portal and, this way, make it possible for distribution. In order to a have a reference at the license server, the creator also uploads reference data for transfer of license income to the creator, for example a bank account. Furthermore, the portal may receive indications for a price for the product. All the information is then stored in the database.

The uploading of programs for distribution is decentralised in the sense that the creators themselves upload programs to a central distribution system without having to negotiate with a sales organisation and without having to negotiate on benefit and prices for the product. If the price is set too low, it is at the creators own volition. If the price is too high, the selling will go slow. The responsibility lies at the creator's side along with the freedom to decide for the conditions for the product. For example, the portal may in addition present a user Interface to the creator for indicating whether the program is limited for distribution among specially selected, authorised distributors, and for indicating the selection of one or more distributors.

Concerning the distributors, the same or another Internet portal is programmed for receiving from a potential distributor a request for authorisation as distributor for a selection or all of the computer program products for which the database contains information. Thus, also the distributor's side is decentralised in that the distributors approach the system in order to become an authorised distributor. Due to the decentralisation, small dealers may benefit from selling specific computer program products matching the community to which the small dealer pertains without the need for the small dealer to set-up a complicated licensing system, and sale system.

The upload of computer program products by the creator for distribution and the authorisation of distributors may be performed automatically by the computer system according to the invention without interference by human personnel at the servers side.

As seen from the server side, the invention may be defined as a license server for distribution of a license for a computer program product over a public data network, wherein the license server is configured for
- receiving digital data representing an automatically computer generated request for a license for the computer program product from a client computer together with a computer identification uniquely identifying the client computer, the request containing a computer program product identification for the specific computer program product and information about an original, authorised distributor of the computer program product.
- checking whether the computer program product information is associated with stored information, and in the affirmative
- submitting a license software key back to the client computer, the license software key containing digital data necessary for activation of the functionality of the computer program product but limited to the specific client computer.

After having received or downloaded the computer program product, the product may be activated only to the extent that the computer ID is read and a message is displayed that a license has to be requested. The program product may also by itself initiate a contact via the public network to the license server for receipt of a license, for example by purchase.

In certain cases, a first license may be given for free for a certain period. However, a second license for free may be prevented for the same computer, because the data for the computer, for example the CPU identification number, has been submitted to the license server once before and has been stored in the database such that the corresponding client computer appears as known in the system for determination of whether a license has to be purchased or can be granted for free for a certain additional period.

As mentioned in connection with the system in general above, the license server may be configured to store in a database related information about the computer program product and the original, authorised distributor for transfer of part of the income from the purchased license to the distributor. Stored may be the price for the program as decided by the creator when uploading the product on the Internet portal. Additionally, there may be stored information about the type of the program, the version and other related information which is necessary or advantageous in connection with sale of licenses for a product. Such information is necessary in order to provide electronic catalogues such that the interested client quickly can find the product.

In accordance to the invention, the license server is advantageously configured for requesting payment for a license in dependence of the stored information and configured for only submitting the license software key upon payment of a license fee. Thus, all financial transactions are concentrated around the license server system and not around the distributor server system.

Essential for the invention is the fact that the distributor ID appears in connection with a computer program product distributed by the distributor and possibly later copied. This information is advantageously contained, preferably in encrypted form, in a software key that is part of the computer program product, for example as part of the desired program or as an additional program in a program product package.

Optionally, the license software key may comprises digital data indicative of the creator of the computer program product.

The computer program product in connection with the invention contains digital information associated with a distributor server, for example account details of the distributor owning the distributor server, and is programmed to read the ID of the computer machine on which the program is installed and programmed to forward the ID of the computer machine together with the digital information associated with the distributor server to the license server.

The client computer in connection with the invention comprises
- reading means for reading out digital computer identification information, for example the CPU ID as mentioned above, uniquely identifying the client computer in which a computer program product has been installed,
- receiving means for receiving a license software key for activation of the program,
- control means for controlling activation of the computer program product only in the case where the computer identification in the license software key is in agreement with the computer identification information read out by said read means.

The client computer may be a personal computer (PC) or a different type of computer, for example a mobile telephone, a PDA (Personal Digital Assistant) or a play station.

Optionally, the distributor may ask the client in connection with the downloading of the program, whether the client is interested in receiving information about updates of the program and/or information about products in certain - possibly likewise - categories. For the creator/developer of the product, this is an easy way to launch new products via the distributor.

### SHORT DESCRIPTION OF THE DRAWINGS

The invention will be explained in more detail with reference to the drawing, where
FIG. 1 illustrates a system according to prior art,
FIG. 2 illustrates the invention,
FIG. 3 illustrates the functioning of the system in more detail,
FIG. 4 illustrates the commercial aspects of the invention.

### DETAILED DESCRIPTION / PREFERRED EMBODIMENT

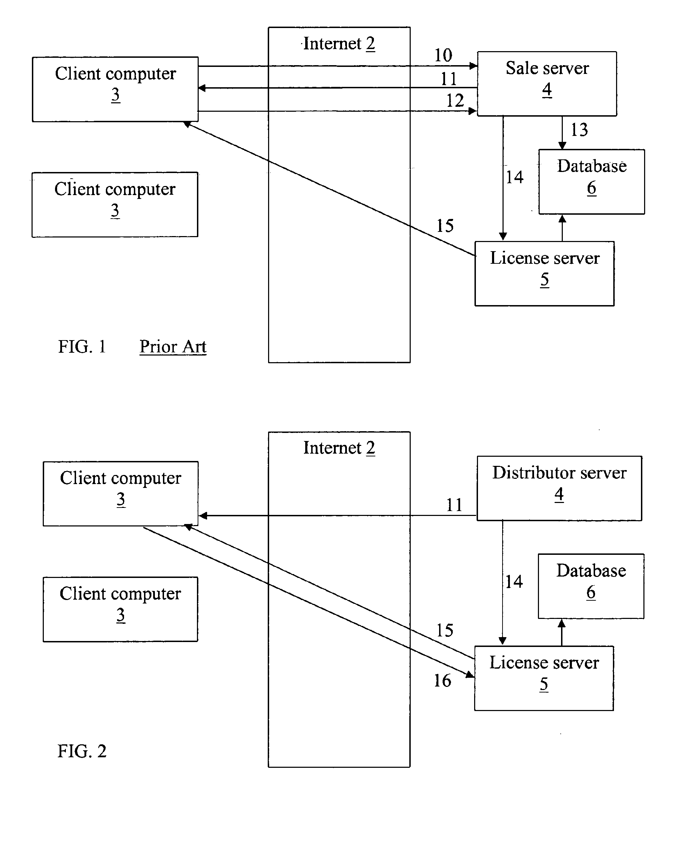

FIG. 1 illustrates a system according to prior art as disclosed in European patent application EP 1 522 914. When the user from a client computer 3 want to purchase a computer program product for download through the Internet 2, the sale server 4 requests a user ID 10 from the client before purchase with a transfer of the product 11 from the software sale server 4 is possible. The software sale server 4 saves 13 in a database 6 the name and version of the sale software, associating the name and the version with the user ID and the apparatus information which was collected when the computer was sold to the client. When the user activates the bought software for the first time on the client computer 3, the computer 3 transmits 12 the user ID, the apparatus information, the software name and the software version to the software sale server 4 to be collated with their respective counterparts, which were saved 13 before in a database server 6. If a result of collation indicates that the pieces of information match their counterparts, the sale server initiates 14 a transfer 15 of a license key from the license server 5 to the client computer 3 for activating the sale software on the computer 3. The reason for this complicated transaction is the aim to transmit a software license key to the user which limits the functioning of the computer program product on a single computer.

As mentioned above in the introduction, the system requires that the seller has a sale server 4 with a connection to a license server 5 and that the seller 4 uses a database 6 for storage of the data. This puts a large part of investment on the seller and necessary maintenance work in order to keep the database 6 updated. Furthermore, the connection between the sale server 6, the database server 6 and the license server 5 has to work properly at all times in order for a client 3 to experience the system to run smoothly.

FIG. 2 illustrates the system according to the invention. The distributor server 4 is only used for distribution 11 of computer programs products without the necessity of revealing any information to the distributor server 4 from the client computer 3 other than the IP address necessary for sending the product. As soon as the distributor server 4 has sent 11 the program product for download, no further action is required from the distributor server 4. The distributor server 4 only distributes products in this case. The computer program product may contain an added digital piece of information - for simplicity called a first software key - in which the distributor ID is contained. Alternatively, the first software key is displayed as an alphanumeric code to the user at the instance of download of the program. The user than may have to enter the alphanumeric code when starting the program.

When the program is started on the client computer 3, a license is requested 16, and a connection to the license server 5 is established for purchasing a regular license or for receiving a time limited license for free as an introduction offer. The request is generated by a computer program in the downloaded computer program product and contains data associated with the ID of the client computer 3. For example, the CPU indentification number may be incorporated in encrypted form in a second software key and transmitted to the license server 5 which stores the information in a database 6.

As soon as the request 16 is accepted, a software license key is displayed to the user or submitted 15 to the client computer 3 for activation of the functionality of the program as desired by the client. The functionality of the program is thus limited to the specific client machine 3, as a program in the computer program product is configured to check, whether the computer ID extractable from the license software key is identical to the computer ID of the client computer 3.

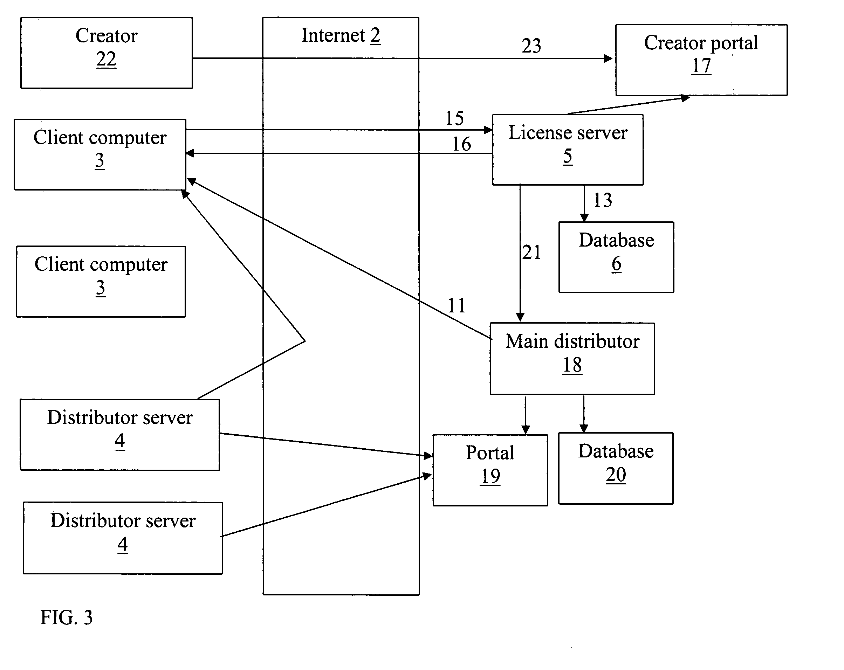

FIG. 3 illustrates the transactions in connection with the invention in greater detail. Computer program product creators 22 may upload 23 their computer product via a portal 17. The portal 17 may be part of the license server system or may be on a different server functionally connected to the license server 5. The creator 22 uploads the program product and submits information about the product. Additionally, the creator 22 may submit prices for the product, banking information for revenues, and information about the channels through which the product is to be distributed.

A main distributor server 18 receives 21 from the license server 5 information about the products that have been uploaded through the creator portal 17 and receives the products themselves for further distribution. Once uploaded, a client 3 may download computer program products from the main distributor 18.

A number of distributors 4 may access a distributor portal 19 and become authorised distributors 4, the identification information of which is stored in a database 20. The distributors 4 may download all or selected programs and the corresponding information from the main distributor 18, or they may create a link on their distributor homepage such that clients 3 are redirected to the main distributor homepage 18. In any case, the distributor 4 may get economical benefits due to the selling effort at their own distributor site 4.

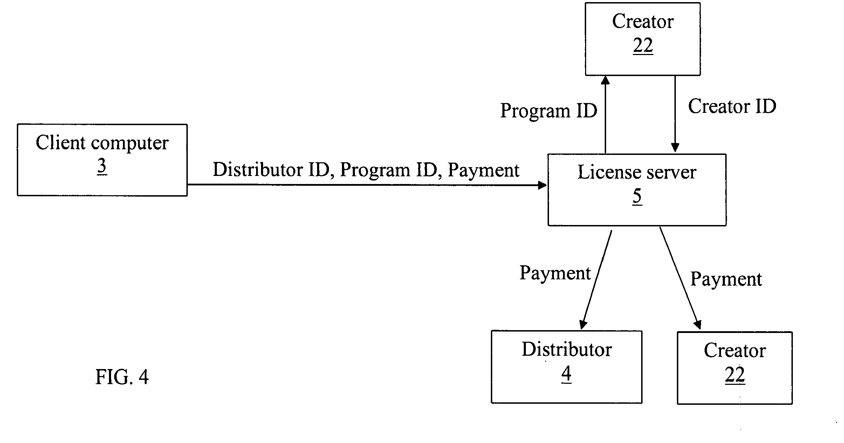

The economical aspects are illustrated in more detail in FIG. 4. From the client 3, the license server 5 receives the distributor ID, the program ID and payment for the product. From the database 6, the license server 5 receives the creator ID once the product ID is known, because the database has got the information link between a specific product and the creator of the product. The payment by the client is then distributed in different shares between the creator 22 and the distributor 4. Part of the amount is kept by the system with the license server 5.

When a license is renewed in case it had been time limited, or a new version of the program is desired, payment for the renewal also implies an automated payment to the other involved parties.

The license system itself is a rather expensive system not suited for a small scale selling. However, by sharing the license system among a large number of minor distributors and a large number of software creators/programmers, the costs for the license system 5 is only a small part of the overall revenue, and the rather large investment for the license server is balanced by the large number of small amounts received as commission for using the license server 5.

## Claims

1. A computer system comprising
- a distributor server for authorised distribution of computer program products, the distributor server being configured to distribute the computer program product with added identity information that is associated with the distributor server, for example in the form of a first software key,
- a license server independent of the distributor server for issuing a license for the distributed computer program products upon request from a client, for example though a second software key, the request containing a computer identification uniquely identifying the client computer, the license sever being programmed to issue a license containing a license software key to be forwarded via a data network to the client and containing digital data necessary for activation of the functionality of the computer program product but limited to the specific client computer of the user.

2. A computer system according to claim 1, wherein the license server is programmed for issuing a license for the distributed computer program products without interference from the distributor server.

3. A computer system according to claim 1 or 2, wherein the license server is functionally connected to a database containing information about the computer program product and containing information about the distributor associated with the distributor server for transfer of part of the income from the purchased license to the distributor.

4. A computer system according to any preceding claim, wherein the license server is functionally connected to a database containing data indicative of the creator of the computer program product for transfer of part of the income from the purchased license to the creator.

5. A computer system according to any preceding claim, wherein the system further comprises an Internet portal for receiving from a product creator
- a computer programs product,
- reference data for transfer of license income to the creator,
- indications for a price for the product,
and storing this information in the database.

6. A computer system according to claim 5, wherein Internet portal is programmed to present a user Interface to the creator for indicating whether the program is limited for distribution among specially selected, authorised distributors, and for indicating the selection of one or more distributors.

7. A computer system according to any preceding claim, wherein the system comprises an Internet portal for receiving from a potential distributor a request for authorisation as distributor for a selection or all of the computer program products for which the database contains information.

8. A license server for distribution of a license for a computer program product over a public data network, the license server being configured for
- receiving digital data representing an automatically computer generated request for a license (first software key) for the computer program product from a client computer together with a computer identification uniquely identifying the client computer, the request (first software key) containing a computer program product identification for the specific computer program product and information about an original, authorised distributor of the computer program product.
- checking whether the computer program product information is associated with stored information, and in the affirmative
- submitting a license software key back to the client computer, the license software key containing digital data necessary for activation of the functionality of the computer program product but limited to the specific client computer.

9. A license server according to claim 8 wherein the license server is configured to store in a database related information about the computer program product and the original, authorised distributor for transfer of part of the income from the purchased license to the distributor.

10. A license server according to claim 8 or 9, wherein the license server is configured for requesting payment for a license in dependence of the stored information and configured for only submitting the license software key upon payment of a license fee.

11. A license server according to any of the claims 8-10, wherein the license software key comprises data indicative of the creator of the computer program product, the license server is configured to store in a database related information about the computer program product and the creator for transfer of part of the income from the purchased license to the crfeator.

12. A license software key for a computer system according to any one of the claims 1-7 or a license server according to any one of the claims 8-11, wherein the license software key comprises digital data indicative of the creator of the computer program product.

13. A computer program product containing digital information associated with a distributor server and being programmed to read the ID of the computer machine on which the program is installed and programmed to forward the ID of the computer machine together with the digital information associated with the distributor server to a license server.

14. A client computer comprising:
- read means for reading out digital computer identification information uniquely identifying the client computer in which a computer program product has been installed,
- receiving means for receiving a license software key for activation of the program,
- control means for controlling activation of said computer program product only in the case where the computer identification in the license software key matches the computer identification information read out by said read means.
